# EUROPEAN PATENT SPECIFICATION

(11) **EP 1 755 375 B1**
(45) Date of publication and mention of the grant of the patent: **02.06.2010**
(21) Application number: 04729795.7
(22) Date of filing: 28.04.2004
(51) Int. Cl.: A01K 5/00, A01K 1/10

(54) **A HOUSING FOR ANIMAL FEEDSTUFF**
GEHÄUSE FÜR TIERFUTTER
ABRI DESTINE A DES ALIMENTS POUR ANIMAUX

(43) Date of publication of application: 28.02.2007
(73) Proprietor: Aisthorpe Holdings Pty Ltd, Toowoomba, QLD 4350 (AU)
(72) Inventor: AISTHORPE, Stephen, Roma, Queensland 4455 (AU); KAY, David, Roma, Queensland 4455 (AU)
(74) Representative: Koepe, Gerd L.
(86) International application number: PCT/AU2004/000545
(87) International publication number: WO 2005/104828

(56) References cited:
- AU-A- 1 831 134
- BE-A- 653 903
- CA-A1- 2 125 102
- DE-A1- 19 645 264
- FR-A- 2 460 614
- FR-A1- 2 537 834
- GB-A- 686 703
- US-A- 5 205 241
- US-A- 5 630 375

## Description

This invention relates to a housing for animal feedstuff. In particular, the invention concerns a housing which protects feedstuff from wet weather.

The invention has been developed primarily for housing various forms of feedstuff for livestock (e. g. horses, cattle, goats and sheep) and will therefore be described in this context. It is to be appreciated, however, that the invention can be readily adapted to house feedstuff for other types of animals.

Housings for animal feedstuff are known from prior art. British Patent GB-A-686703 for example discloses feeding troughs for livestock. A cover for a food container is supported in spaced relation by legs connected by a ring. Lugs support the ring. For closing the cover, depressions in the ring are turned into line with the lugs.

Canadian patent application CA-A 2,125,102 discloses a feeder for minerals to cattle comprising a hexagonal base frame with legs extending inwardly from the base frame upwardly in a vertical portion and then inclined upwardly and inwardly to an apex above the center of the frame.

Belgian Patent BE-A653 903 discloses an animal feeding device comprising a trough mounted on end supports between which extend adjustable bars positioned so that young animals e.g. lambs have access to the trough but larger, adult animals are prevented from reaching it. A wooden panel prevents access to the trough through the end supports and a roof may be provided.

U.S. Patent A 5,205,241 discloses a livestock hay feeder/storage device and involves the principle of utilizing a covered feeding device that can also serve as storage space for hay. It consists of a box-like steel structure that may be mounted on skids or wheels for mobility. The ends and top are covered for weather protection and the other two sides consist of removable/adjustable gates through which the animals can eat. These gates can be adjusted to control, or ration, consumption of the hay.

U.S. Patent A 5,630,375 discloses a livestock feeder which includes a frame assembly with multiple legs and a web subassembly including multiple web bars extending radially outwardly from a web center to the legs. An annular tub support ring is mounted on the insides of the legs. A tub includes a frusto-conical sidewall. A circular, flexible cover is mounted on the web subassembly and has a covering position generally covering the tub rim and an open position deflected upwardly for accessing the tub contents.

### BACKGROUND OF THE INVENTION

A problem with some types of livestock-feeding containers, troughs and stations is that the feedstuff may not be adequately protected from wet weather. When feedstuff becomes wet, it usually spoils. In particular, when feedstuff containing urea is wetted, the urea converts to uric acid, and the feedstuff becomes toxic to livestock.

The present inventors have now invented a housing for animal feedstuff which minimises the problem referred to above, or provides the public with a useful or commercial choice.

### SUMMARY OF THE INVENTION

According to the present invention there is provided a housing for animal feedstuff, said housing including:
an annular base:
   a cone-shaped roof extending over the base;
   an annular roof support member extending beneath the roof and connected to the roof so that the roof is able to maintain its cone shape when the housing is being transported or stored:
tubular uprights spaced apart from one another and connected to the annular base and the annular roof support member such that the roof is pivotable between raised and lowered positions relative to the uprights;
a container having a base and being locatable between the uprights for containing feedstuff, wherein an animal accesses feedstuff within the container by way of spaces between the uprights: and
a crosspiece extending between the uprights for supporting the container base above the annular base,
wherein the annular base, crosspiece and uprights when connected to one another as a single first piece are stackable with like first pieces of other housings like said housing such that the crosspieces are in contact with one another, the container is nestable with containers of other housings like said housing between the uprights of said first pieces, and the roof together with the annular roof support member are detachable from the uprights as a single second piece and nestable with like second pieces of other housings like said housing, and are stackable atop or below the first pieces, such that said housings are transportable or storable in a compact form.

### DETAILED DESCRIPTION OF THE INVENTION

Preferably, the housing is suited for housing feedstuff for livestock such as horses, cattle, goats or sheep.

The roof can be of any suitable size, shape and construction. Preferably, the roof is in the form of a Chinaman's hat, being cone shaped and overhanging the base. The roof can have a pitch between about 15-40 degrees, but preferably about 30 degrees. The roof can be reinforced, for example, with radially extending ribs. An annular roof support member can extend beneath the roof. The annular roof support member can be circular pipe and can be connected to the roof in any suitable way. For instance, U-shaped bolts can be used to connect the roof to the annular roof support member.

The uprights can be of any suitable size, shape and construction. Each upright preferably comprises one or more pipes. The uprights can extend at any suitable angle relative to one another and to the base. The uprights can extend linearly and/or non-linearly from the base. The uprights can extend perpendicularly; inwardly and/or outwardly relative to the base.

The housing can have an annular upright support member connected to an upper end of each said upright. The annual upright support member can be a circular pipe.

The uprights can be of fixed length or of adjustable length. Preferably, the uprights are of adjustable length such that the roof can be raised or lowered relative to the base. Any means for adjusting the length of the uprights can be used. Preferably, each said upright comprises upper and lower telescopic halves, said upper telescopic half having a substantially vertically extending region and an arcuate region extending outwardly from an end of the vertically extending region to the annular upright support member, said lower telescopic half having a substantially vertically extending region and an arcuate region extending outwardly from an end of the vertically extending region to the base, and one said vertically extending region is slideable within the other said vertically extending region. Preferably, the upper and lower telescopic halves each comprise a pipe having a linear portion and an arcuate portion.

Any suitable locking means can be used to lock the upper and lower telescopic halves together such that the uprights are of the desired length. For instance, a latch bolt can be extended through aligned openings in the substantially vertically extending regions of the upper and lower telescopic halves. If desired, a sprung latch bolt can be used.

The roof can be detachably connected to the uprights or to the annular upright support member. The roof can be detachably connected in any suitable way. For instance, the roof can be connected to the annular upright support member with U-shaped bolts.

The roof can be pivoted between raised and lowered positions relative to the uprights. The roof can be pivoted in any suitable way. Preferably, the annular roof support member is pivotally connected to the annular upright support member for pivotal movement relative thereto. The roof can be pivoted to a raised position such that the container can be charged with feedstuff through the top of the housing between the annular members.

The base can be of any suitable size, shape and construction. The base can comprise, for instance, a ground-contacting annular member, such as a circular pipe. Preferably, there are four uprights that are spaced equidistantly around the base.

The housing can have a crosspiece extending between the uprights for supporting a base of the container. The crosspiece can be of any suitable size, shape and construction. Preferably, the crosspiece is X-shaped, having ends detachably connected to the uprights. The crosspiece can be detachably connected in any suitable way, e.g. using a clamp.

The housing can have a container guard extending between the uprights and adjacent to an upper edge of the container. The guard can prevent the upper edge of the container from being deformed or destroyed by an animal. The guard can be of any suitable size, shape and construction. The guard is preferably annular and is a circular pipe. The guard can be connected to the uprights in any suitable way. Preferably, the guard is detachably connected by way of J-shaped bolts.

The housing can have a container support extending between the uprights and beneath a rim of the container. The container support can be of any suitable size, shape and construction. Preferably the container support is annular and is a circular pipe. The container support can be connected to the uprights in any suitable way. Preferably the container support is detachably connected by way of J-shaped bolts.

The container can be of any suitable size, shape and construction. The container can be used to contain liquid and/or solid feedstuff. Preferably, the container has a sloping sidewall such that it is nestable/stackable within a like container.

In one embodiment, the container has a base, a circular sloping sidewall extending from the base, and a rim extending around an upper edge of the sidewall. Such a container is suitable for containing feedstuff for horses and cattle.

In another embodiment, the container is in the form of a pot plant container and saucer, whereby feedstuff within the pot plant container flows into and fills the saucer. Such a container is suitable for containing feedstuff for goats. In this embodiment, an upper part of the container comprises a circular sloping sidewall and a rim extending from an upper edge of the sidewall, and a lower part of the container is spaced from the upper part of the container and comprises a base having a raised peripheral edge and a raised central portion that is either hemispherical or conical in shape.

The housing can have one or more skids connected to the base for moving the housing from one location to an other. The skids can be of any suitable size, shape and construction. The housing can have metal skids shaped much like a pair of skis.

The housing can have means for being anchored to the ground, and the anchoring means can be of any suitable size, shape and construction. Preferably, the anchoring means comprises a chain extending around the base, and a ground peg for securing the chain to the ground. This embodiment of the anchoring means allows for some movement of the housing, such that the base does not become embedded within the ground and begin to rust.

As mentioned, the housing can be made of any suitable material, such as galvanised metal. The roof can be made of any suitable material, such as galvanised sheet metal or plastics material (e.g. polyethylene).

Different parts of the housing can be welded together or detachably connected together. Preferably, the housing can be disassembled or partly disassembled for transport or storage in a compact form. Preferably, pieces of the housing are stackable with like pieces of other housings, such that multiple housings can be transported or stored in a compact form. For instance, a piece comprising the base together with one half of each upright can be stacked with a like piece of another housing. Another piece comprising the annular upright support member together with the other half of each upright can be stacked with a like piece of another housing and with the base piece. The container can be nested within a like container. The roof can be nested within a like roof of another housing. The container/s can be placed between the uprights, the roofs can be inverted and placed on the uprights.

Preferred embodiments of the invention will now be described by way of reference to the accompanying drawings.

### BRIEF DESCRIPTION OF THE DRAWINGS

Figure 1 is a perspective view of a housing for animal feedstuff, according to an embodiment of the invention;
Figure 2 is a cross sectional view of a housing for animal feedstuff, according to an embodiment of the invention;
Figure 3 is a perspective view of a housing for animal feedstuff, according to an embodiment of the invention; and
Figure 4 is a cross sectional view of the housing of Figure 3.

### DESCRIPTION OF THE PREFERRED EMBODIMENTS

In the drawings like reference numerals refer to like features.

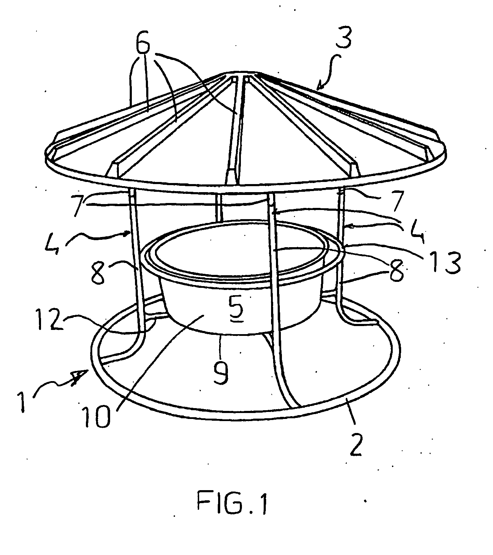

Figure 1 shows a housing 1 for animal feedstuff configured to feed animals such as cattle. The housing 1 includes a base 2, a roof 3, four uprights 4 and a container 5 for containing feedstuff.

The roof 3 is in the form of a Chinaman's hat that overhangs the base 2. The roof 3 has radially extending ribs 6 (only some of which have been labelled) and a pitch of about 30 degrees. The roof is made of polyethylene.

The base 2 is a circular galvanised pipe. Although not shown in Figure 1, an annular upright support member consisting of a circular galvanised pipe is connected (welded) to an upper end of each upright 4. The roof 3 is detachably connected to the annular upright support ring by way of U-shaped bolts.

The uprights 4 are of adjustable length such that the roof 3 can be raised or lowered relative to the base 2. Each upright 4 comprises upper 7 and lower 8 telescopic halves. Each upper telescopic half 7 has a vertically extending region and an arcuate region extending outwardly from an end of the vertically extending region to the annular upright support member. Each lower telescopic half 8 has a vertically extending region and an arcuate region extending outwardly from an end of the vertically extending region to the base 2. The uprights 4 are welded to base 2. The upper 7 and lower 8 telescopic halves each consist of a galvanised pipe having a linear portion and an arcuate portion. Each upper telescopic half 7 is slidable within each lower telescopic half 8. Although not shown in Figure 1, a latch bolt locks the upper and lower telescopic halves 7, 8 together such that the uprights 4 are of the desired length. The latch bolt is extended through aligned openings in the vertically extending regions of the telescopic halves 7, 8.

The container 5 has a base 9, a circular sloping sidewall 10 extending from the base 9, and a rim 11 extending from the sidewall 10. The container is made is of polyethylene.

The housing 1 also includes an X-shaped crosspiece 12 that supports the base 9 of the container 5 above the ground. Each end of crosspiece 12 is detachably connected to an upright 4 by way of a clamp (downee fitting). The container 5 can be raised or lowered relative to the roof 3 by repositioning crosspiece 12 relative to the uprights 4. The crosspiece 12 consists of galvanised metal pipes joined together at one end.

The housing 1 also includes an annular container guard 13 extending between the uprights 4 and adjacent to the rim 11 of the container 5. The guard 13 consists of a circular galvanised pipe. J-shaped bolts (not shown) connect the guard 13 to each upright 4 such that the guard 13 is detachably connected. The guard 13 can prevent the rim 11 of the container 5 from being deformed or destroyed by an animal.

In use, the container 5 is charged with feedstuff by way of spaces between adjacent uprights 4. These spaces also allow cattle to access feed within the container 5. The height of the container 5 and the height of the roof 3 can be adjusted for different sized animals and for optimal protection of the feedstuff from wet weather.

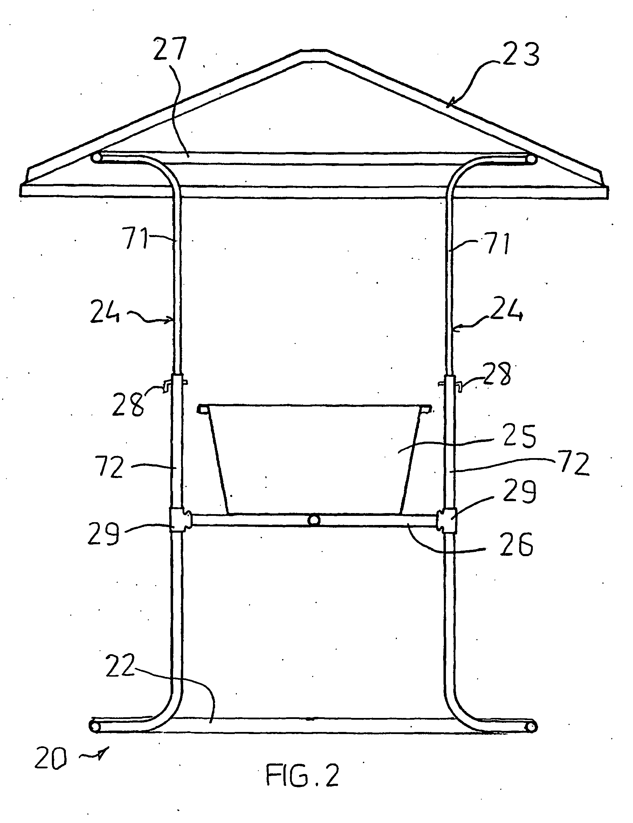

Figure 2 shows a housing 20 for animal feedstuff configured to feed animals such as horses. The housing 20 is almost identical to housing 1 in that it includes a base 22, a roof 23, four telescopic uprights 24, a container 25 and a crosspiece 26. The figure further shows an annular upright support member 27, downee fittings 29 and latch bolts 28 for locking telescopic halves 71, 72 of the uprights 24 together (details which were not shown in Figure 1).

The housing 20 is configured to feed horses in that the crosspiece 26 and roof 23 are raised relative to housing 1, and housing 20 does not have a guard like guard 13 of housing 1.

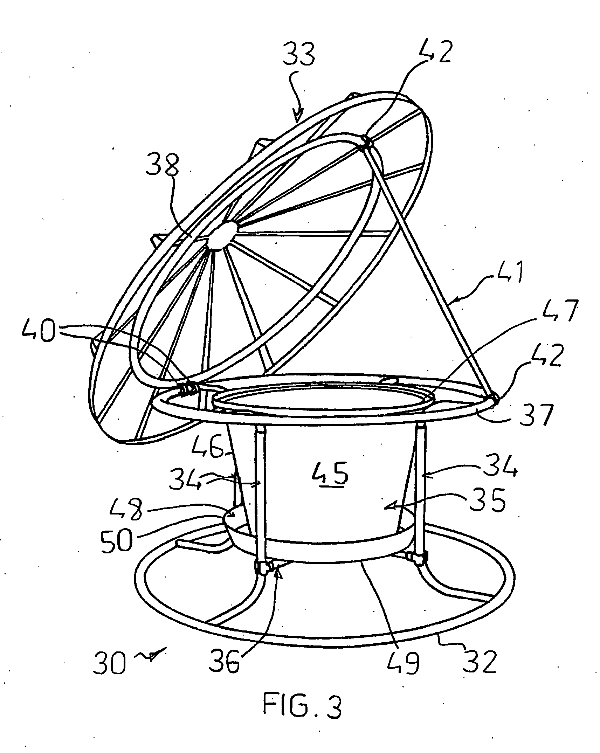

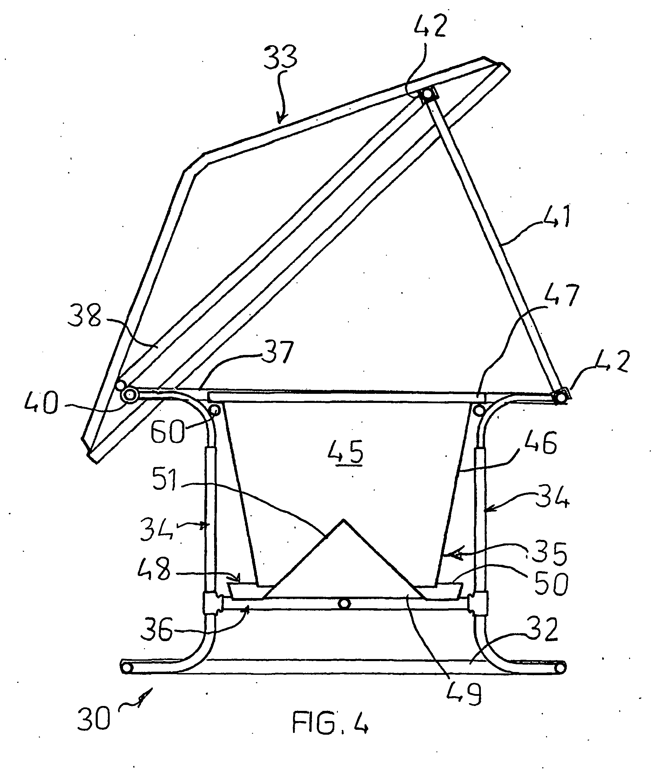

Figures 3 and 4 show a housing 30 for animal feedstuff configured to feed animals such as goats. The housing 30 is very similar to housings 1 and 20. The housing 30 includes a base 32, a roof 33, four telescopic uprights 34, a container 35, a crosspiece 36, and an annular upright support member 37.

The housing 30 further includes an annular roof support member 38 extending beneath the roof 33. The annular roof support member 38 consists of a circular pipe and is connected to the roof 33 by way of U-shaped bolts.

The roof 33 can be pivoted between raised and lowered positions relative to the annular upright support member 37. A pair of metal rings 40 extend from annular roof support member 38 around the annular upright support member 37 to provide the pivoting action.

A prop 41, having a pair of jaws 42 at each end, enables the roof 33 to be held in the raised position, as seen in Figure 3. One of the jaws 42 engages the annular upright support member 37 and the other jaw 42 engages the annular roof support member 38.

Container 35 differs from containers 5 and 25 in that it is in the form of a pot plant container and saucer, whereby feedstuff within the pot plant container flows into and fills the saucer. An upper part 45 of the container 35 comprises a circular sloping sidewall 46 and a rim 47 extending therefrom. A lower part 48 of the container 35 is spaced from the upper part 45 and comprises a base 49 having a raised peripheral edge 50 and a conical-shaped central portion 51, as seen in Figure 4.

The housing 30 further includes an annular container support 16 extending between the uprights 34 and beneath the rim 47. The container support 16 holds upper part 45 above lower part 48 such that feedstuff within upper part 45 can flow under gravity into lower part 48.

In use, the roof 33 is raised and held in place with the prop 41, and the container upper part 45 is charged with feedstuff by way of the space between the roof 33 and the annular upright support member 37.

If desired, housings 1 and 20 can be readily modified such that they also have a pivotable roof, such that their containers 5, 25 can be filled from above in a similar manner.

An advantage of the present invention is that pieces of each housing 1, 20, 30 can be stacked with like pieces of other housings, such that multiple housings can be transported or stored in a compact form. With regard to housing 20, a piece comprising the annular upright support member 27 and half of each upright 7 can be stacked together with like pieces of other housings (after first detaching the roof 23). Another piece comprising the base 22, the crosspiece 26 and the other half 72 of each upright can be stacked together with like pieces of other housings. Moreover, the annular upright support member 27 piece can be inverted and stacked together with the base 22 piece. Like containers 25 can be nested and placed between the uprights 24. The roof 23 can be stacked together with like roofs. The stacked roofs can be inverted and placed on top of the upright halves 72, 71.

With regard to housing 30, a piece comprising the annular upright support member 37, the annual container support 60 and half of each upright can be stacked together with like pieces of other housings (after first detaching annular roof support member 38). Another piece comprising the base 32, the crosspiece 36 and the other half of each upright can be stacked together with like pieces of other housings. Moreover, the annular upright support member 37 piece can be inverted and stacked together with the base 32 piece. The container 35 can be nested with like containers. This can be achieved by nesting the upper part 45 with other like container upper parts, and by nesting the lower part 48 with other like container lower parts. The upper parts 45 can then be placed on the lower parts 48 and the lower parts 48 can be placed between the uprights 34. The roof 33 and annular roof support member 38 can be stacked together with like roofs and members. The stacked roofs and members can be inverted and placed on top of the upright 34 halves.

## Claims

1. A housing (1) for animal feedstuff, said housing (1) including:
an annular base (2);
a cone-shaped roof (3) extending over the base (2);
an annular roof support member (38) extending beneath the roof (3) and connected to the roof (3) so that the roof (3) is able to maintain its cone shape when the housing (1) is being transported or stored;
tubular uprights (4) spaced apart from one another and connected to the annular base (2) and the annular roof support member (38) such that the roof (3) is pivotable between raised and lowered positions relative to the uprights (4);
a container (5) having a base (9) and being locatable between the uprights (4) for containing feedstuff, wherein an animal accesses feedstuff within the container (5) by way of spaces between the uprights (4); and
a crosspiece (12) extending between the uprights (4) for supporting the container base (9) above the annular base (2),
wherein the annular base (2), crosspiece (12) and uprights (4) when connected to one another as a single first piece are stackable with like first pieces of other housings like said housing (1) such that the crosspieces are in contact with one another, the container (5) is nestable with containers of other housings like said housing (1) between the uprights (4) of said first pieces, and the roof (3) together with the annular roof support member (38) are detachable from the uprights (4) as a single second piece and nestable with like second pieces of other housings like said housing (1) and are stackable atop or below the first pieces, such that said housings are transportable or storable in a compact form.

2. The housing (1) of claim 1, wherein the annular base (2) comprises a circular pipe.

3. The housing (1) of claim 1 or claim 2, wherein each said upright (4) comprises at least one pipe.

4. The housing (1) of any one of claims 1 to 3, wherein the annular roof support member (38) is a circular pipe.

5. The housing (1) of any one of the preceeding claims, wherein the crosspiece (12) has ends detachably connected to the uprights (4).

6. The housing (1) of any one of the preceeding claims, wherein the crosspiece (12) comprises a pipe.

7. The housing (1) of claim 6, wherein the container (5) is raised or lowered relative to the roof (3) by repositioning the crosspiece (12) relative to the uprights (4).

8. The housing (1) of any one of the preceeding claims, wherein each said upright (4) has a vertically extending region having an upper end and a lower end, an arcuate region extends outwardly from the upper end towards the annular roof support member (38), and an arcuate region extends outwardly from the lower end to the annular base (2).

9. The housing (1) of any one of the preceeding claims, wherein four said uprights (4) are spaced equidistantly around the annular base (2).

10. The housing (1) of any one of the preceeding claims further including an annular container support (60) detachably connected to each said upright (4) and extending beneath an upper edge of the container (5).

11. The housing (1) of claim 10, wherein the annular container support (60) comprises a circular pipe.

## Patentansprüche

1. Gehäuse (1) für Tierfutter, wobei das Gehäuse (1) einschließt:
eine ringförmige Basis (2);
ein konusförmiges Dach (3), das sich über der Basis (2) erstreckt;
ein ringförmiges Dach-Stützelement (38), das sich unterhalb des Dachs (3) erstreckt und mit dem Dach (3) verbunden ist, so dass das Dach (3) in der Lage ist, seine Konus-Form aufrechtzuerhalten, wenn das Gehäuse (1) transportiert oder gelagert wird;
rohrförmige Stützen (4), die voneinander beabstandet sind und mit der ringförmigen Basis (2) und dem ringförmigen Dach-Stützelement (38) verbunden sind, so dass das Dach (3) zwischen angehobenen und erniedrigten Positionen, bezogen auf die Stützen (4), schwenkbar ist;
einen Behälter (5), der eine Basis (9) aufweist und zwischen den Stützen (4) mit dem Ziel des Enthaltens von Futter anordenbar ist, worin ein Tier Zutritt zu dem Futter innerhalb des Behälters (5) über den Weg der Zwischenräume zwischen den Stützen (4) erhält; und
ein Querstück (12), das sich zwischen den Stützen (4) zum Tragen der Behälterbasis (9) oberhalb der ringförmigen Basis (2) erstreckt;
worin die ringförmige Basis (2), das Querstück (12) und die Stützen (4), wenn sie miteinander als ein einziges erstes Stück verbunden sind, mit gleichen ersten Stücken von anderen Gehäusen wie das Gehäuse (1) stapelbar sind, so dass die Querstücke in Kontakt miteinander sind, der Behälter (5) mit Behältern von anderen Gehäusen wie das Gehäuse (1) zwischen den Stützen (4) der ersten Stücke ineinander stellbar ist, und das Dach (3) mit dem ringförmigen Dach-Stützelement (38) von den Stützen (4) als ein einziges zweites Stück abmontierbar sind und mit gleichen zweiten Stücken anderer Gehäuse wie das Gehäuse (1) ineinander stellbar sind und oben auf den ersten Stücken oder darunter stapelbar sind, so dass die Gehäuse in kompakter Form transportierbar oder stapelbar sind.

2. Gehäuse (1) nach Anspruch 1, worin die ringförmige Basis (2) ein kreisförmiges Rohr umfasst.

3. Gehäuse (1) nach Anspruch 1 oder Anspruch 2, worin jede Stütze (4) wenigstens ein Rohr umfasst.

4. Gehäuse (1) nach irgendeinem der Ansprüche 1 bis 3, worin das ringförmige Dach-Stützelement (38) ein kreisförmiges Rohr ist.

5. Gehäuse (1) nach irgendeinem der vorangehenden Ansprüche, worin das Querstück (12) Enden aufweist, die abmontierbar mit den Stützen (4) verbunden sind.

6. Gehäuse (1) nach irgendeinem der vorangehenden Ansprüche, worin das Querstück (12) ein Rohr umfasst.

7. Gehäuse (1) nach Anspruch 6, worin der Behälter (5) relativ zu dem Dach (3) angehoben oder abgesenkt wird durch Neu-Positionieren des Querstücks (12), relativ zu den Stützen (4).

8. Gehäuse (1) nach irgendeinem der vorangehenden Ansprüche, worin jede Stütze (4) einen sich vertikal erstreckenden Bereich aufweist, der ein oberes Ende und ein unteres Ende hat, sich ein gebogener Bereich von dem oberen Ende nach außen in Richtung auf das kreisförmige Dach-Stützelement (38) erstreckt und sich ein gebogener Bereich nach außen von dem unteren Ende zu der ringförmigen Basis (2) erstreckt.

9. Gehäuse (1) nach irgendeinem der vorangehenden Ansprüche, worin vier Stützen (4) mit gleichem Abstand um die ringförmige Basis (2) beabstandet sind.

10. Gehäuse (1) nach irgendeinem der vorangehenden Ansprüche, welches weiter einschließt einen ringförmigen Behälterträger (60), der abmontierbar mit jeder Stütze (4) verbunden ist und sich unterhalb einer Unterkante des Behälters (5) erstreckt.

11. Gehäuse (1) nach Anspruch 10, worin der ringförmige Behälterträger (60) ein kreisförmiges Rohr umfasst.

## Revendications

1. Abri (1) pour aliments pour animaux, ledit abri (1) incluant :
une base annulaire (2) ;
un toit (3) en forme de cône s'étendant au-dessus de la base (2) ;
un élément annulaire de support de toit (38) s'étendant en-dessous du toit (3) et connecté au toit (3) de telle sorte que le toit (3) est apte à conserver sa forme de cône lorsque l'abri (1) est transporté ou stocké ;
des montants verticaux (4) tubulaires espacés les uns des autres et connectés à la base annulaire (2) et à l'élément annulaire de support de toit (38) de telle sorte que le toit (3) peut pivoter entre des positions levée et baissée par rapport aux montants verticaux (4) ;
un récipient (5) ayant une base (9) et pouvant être positionné entre les montants verticaux (4) pour contenir des aliments pour animaux, dans lequel un animal accède aux aliments pour animaux à l'intérieur du récipient (5) à travers des espaces entre les montants verticaux (4) ; et
une traverse (12) s'étendant entre les montants verticaux (4) pour supporter la base (9) de récipient au-dessus de la base annulaire (2),
dans lequel la base annulaire (3), la traverse (12) et les montants verticaux (4), lorsqu'ils sont connectés les uns aux autres comme une seul première partie, sont empilables avec des premières parties semblables d'autres abris comme ledit abri (1), de telle sorte que les traverses sont en contact les unes avec les autres, le récipient (5) peut être logé avec des récipients d'autres abris comme ledit abri (1) entre les montants verticaux (4) desdites premières parties, et le toit (3) avec l'élément annulaire de support de toit (38) sont détachables des montants verticaux (4) comme une deuxième partie unique et peuvent être logés avec des deuxièmes parties semblables d'autres abris comme ledit abri (1) et sont empilables au-dessus ou en-dessous des premières parties, de telle sorte que lesdits abris sont transportables ou stockables sous une forme compacte.

2. Abri (1) selon la revendication 1, dans lequel la base annulaire (2) comprend un tuyau circulaire.

3. Abri (1) selon la revendication 1 ou la revendication 2, dans lequel chaque dit montant vertical (4) comprend au moins un tuyau.

4. Abri (1) selon l'une quelconque des revendications 1 à 3, dans lequel l'élément annulaire de support de toit (38) est un tuyau circulaire.

5. Abri (1) selon l'une quelconque des revendications précédentes, dans lequel la traverse (12) a des extrémités connectées de façon détachable aux montants verticaux (4).

6. Abri (1) selon l'une quelconque des revendications précédentes, dans lequel la traverse (12) comprend un tuyau.

7. Abri (1) selon la revendication 6, dans lequel le récipient (5) est levé ou baissé par rapport au toit (3) en repositionnant la traverse (12) par rapport aux montants verticaux (4).

8. Abri (1) selon l'une quelconque des revendications précédentes, dans lequel chaque dit montant vertical (4) a une région s'étendant verticalement ayant une extrémité supérieure et une extrémité inférieure, une région en arc s'étend vers l'extérieur à partir de l'extrémité supérieure vers l'élément annulaire de support de toit (38), et une région en arc s'étend vers l'extérieur à partir de l'extrémité inférieure jusqu'à la base annulaire (2).

9. Abri (1) selon l'une quelconque des revendications précédentes, dans lequel quatre dits montants verticaux (4) sont espacés de façon équidistante autour de la base annulaire (2).

10. Abri (1) selon l'une quelconque des revendications précédentes incluant en outre un support annulaire de récipient (60) connecté de façon détachable à chaque dit montant vertical (4) et s'étendant en-dessous d'un bord supérieur du récipient (5).

11. Abri (1) selon la revendication 10, dans lequel le support annulaire de récipient (60) comprend un tuyau circulaire.
